# EUROPÄISCHE PATENTSCHRIFT

(11) **EP 2 719 357 B1**
(45) Veröffentlichungstag und Bekanntmachung des Hinweises auf die Patenterteilung: **24.05.2017**
(21) Anmeldenummer: 12188176.7
(22) Anmeldetag: 11.10.2012
(51) Int. Cl.: A61C 13/36, A61C 11/00

(54) **Verfahren, Übertragungsvorrichtung und Schablonenkörper zum Herstellen von Zahn- oder/und Knochenersatz für ein Gebiss**
Method, transmission apparatus and template body for producing dental and/or bone substitute for dentition
Procédé, dispositif de transmission et corps de gabarit destinés à fabriquer des prothèses dentaires et/ou osseuses pour une mâchoire

(43) Veröffentlichungstag der Anmeldung: 16.04.2014
(73) Patentinhaber: Tridenta Dentaltechnik Gmbh, 10407 Berlin (DE); Krischollek, Michael, 12589 Berlin (DE)
(72) Erfinder: Krischollek, Michael, 12589 Berlin (DE); Ilmer, Viola, 10367 Berlin (DE); Jasper, Frank, 10318 Berlin (DE)
(74) Vertreter: Schneider, Henry

(56) Entgegenhaltungen:
- DE-A1-102005 034 803
- US-A- 5 366 373
- Panagiotis Lampropoulos: "Das Staub-Cranial-System- Reliabilität der Messpunkte zur Rekonstruktion der Zahnstellung im zahnlosen Kiefer", , 31 December 2003 (2003-12-31), pages 1-80, XP055252609, Retrieved from the Internet: URL:https://www.freidok.uni-freiburg.de/fe dora/objects/freidok:821/datastreams/FILE1 /content [retrieved on 2016-02-23]

## Beschreibung

Die Erfindung betrifft ein Verfahren zum Herstellen von Zahn- oder/und Knochenersatz für ein Gebiss mit einem Defekt, einen Schablonenkörper und eine Übertragungsvorrichtung zum Herstellen des Zahn- oder/und Knochenersatzes.

Ein Gebiss mit einem Defekt wird herkömmlich mit einem Zahn- oder/und Knochenersatz versehen, um das aufgrund des Defekts entstandene Funktionsdefizit möglichst vollständig zu kompensieren. Der Defekt kann entstanden sein durch Abrasion der Kauflächen, Verlust von einem Zahn oder mehreren Zähnen oder einer kompletten Zahnreihe. Ferner kann der Defekt des Gebisses mit einem Kieferbruch, einem Knochenverlust oder einer Deformation des gesamten Schädels einhergehen. Bei der Herstellung des Zahn- oder/und Knochenersatzes wird herkömmlich ein Modell des defekten Gebisses erstellt, wobei der Oberkiefer und der Unterkiefer des Gebisses entsprechend modelliert werden. Herkömmlich kann dieses Modell ein Gipsmodell sein oder virtuell als ein Computermodell vorliegen.

Der Unterkiefer ist an den Oberkiefer durch das Kiefergelenk angelenkt, wobei aufgrund des Defekts des Gebisses die relative Stellung des Unterkiefers und dessen Zähne zum Oberkiefer und dessen Zähne sich in einer von der Idealposition abweichenden Stellung befinden. Die dadurch bedingte Fehlstellung kann beispielsweise zu Beeinträchtigungen im gesamten Gelenk- und Wirbelsäulensystem führen, insbesondere zur Craniomandibuläre Dysfunktionen (CMD) sowie damit verbunden zu muskulären Verspannungen und Kopfschmerzen, womit eine Beeinträchtigung des Wohlbefindens der betroffenen Person einhergehen kann. Problematisch ist, dass das Gebiss, das zum Zeitpunkt, an dem der Zahn- oder/und Knochenersatz hergestellt wird, lediglich mit dem Defekt vorliegt, wodurch sich die Idealposition des Unterkiefers relativ zum Oberkiefer nicht vollständig rekonstruieren lässt.

Herkömmlich ist es bekannt, mit Hilfe eines Kiefermodells die relative Position des Unterkiefers zum Oberkiefer anzunähern, wobei anhand von empirisch erlangten Daten eine möglichst optimale Positionierung des Unterkiefers relativ zum Oberkiefer versucht wird. Mit dieser Vorgehensweise ist allerdings eine eineindeutige Positionierung des Unterkiefers relativ zum Oberkiefer nicht möglich, wobei Freiheitsgrade bleiben. Dadurch hängt die Qualität des herzustellenden Zahn- oder /und Knochenersatzes vom Geschick und von der Erfahrung des Zahntechnikers ab eine Positionierung des Unterkiefers relativ zum Oberkiefer zu finden, die der Idealposition möglichst nahe kommt.

Ein Hilfsmittel hierzu findet der Zahntechniker im Analyse- und Fertigungssystem "Staub-Cranial", mit dem anhand spezifischer anatomischer Gegebenheiten die Positionierung des Unterkiefermodells relativ zum Oberkiefermodell angenähert werden kann ("Staub-Cranial-System - Reliabilität der Messpunkte zur Rekonstruktion zur Zahnstellung im zahnlosen Kiefer", Inaugural-Dissertation an der Albert-Ludwigs-Universität Freiburg im Breisgau, Panagiotis Lampropoulos, 2003). Das Staub-Cranial-System basiert auf anatomische Craniale Referenzpunkte am Oberkiefer und am Unterkiefer. Der Oberkiefer und der Unterkiefer weisen jeweils vier Craniale Referenzpunkte auf, wobei jeder Kiefer einen rechten und einen linken Direktionspunkt und einen vorderen und einen hinteren Induktionspunkt aufweist. Die Direktionspunkte befinden sich im Backenzahnbereich, wohingegen sich die Induktionspunkte im Schneidezahnbereich befinden.

Bekannt ist es, eine Positionierung des Oberkiefermodells in Bezug auf eine virtuelle Ebene mit Hilfe der Cranialen Referenzpunkte des Oberkiefers vorzunehmen. Außerdem ist es bekannt, eine Positionierung des Unterkiefermodells mit Hilfe der Cranialen Referenzpunkte des Unterkiefers bezogen auf eine virtuelle Ebene vorzunehmen. Die Lage des Oberkiefermodells und des Unterkiefermodells bezogen auf ihre virtuellen Referenzebenen ergibt sich aus empirischen Bestandsaufnahmen an Probanden. Dadurch ist allerdings eine individuelle, auf die betroffene Person abgestimmte Positionierung des Unterkiefers relativ zum Oberkiefer nicht zu erzielen, so dass das Gebiss mit dem herkömmlich hergestellten Zahnersatz im allgemeinen Fall eine Fehlstellung des Kiefergelenks hat.

DE 10 2005 034 803 A1 offenbart ein Verfahren zur Herstellung von Zahnersatz, bei der zunächst ein Modell eines ungeschädigten Gebisses angefertigt wird. Diese Modell wird gescannt, digitalisiert und virtuell einartikuliert. Die so abgespeicherten Daten dienen der späteren Herstellung von Zahnersatz.

Aufgabe der Erfindung ist es ein Verfahren zum Herstellen von Zahn- oder/und Knochenersatz für ein Gebiss mit einem Defekt, sowie einen Schablonenkörper und eine Übertragungsvorrichtung zum Herstellen des Zahn- oder/und Knochenersatzes zu schaffen, wobei der Zahn- oder/und Knochenersatz derart gestaltet ist, dass in dem Gebiss eine Fehlstellung im Kiefergelenk unterbunden ist.

Das erfindungsgemäße Verfahren zum Herstellen von Zahn- oder/und Knochenersatz für ein Gebiss mit einem Defekt, wobei das Gebiss einen Oberkiefer und einen Unterkiefer aufweist, weist die Schritte auf: Erfassen des linken und des rechten Direktionspunkts sowie eines Induktionspunkts des Oberkiefers als drei Craniale Referenzpunkte des Oberkiefers und Erfassen des linken und des rechten Direktionspunkts sowie eines Induktionspunkts des Unterkiefers als drei Craniale Referenzpunkte des Unterkiefers, wobei der Zeitpunkt des Erfassens der sechs Cranialen Referenzpunkte zu einem Zeitpunkt erfolgt, bei dem der Defekt noch nicht vorliegt; Speichern der relativen räumlichen Lage der Cranialen Referenzpunkte, so dass die räumliche Stellung der sechs Cranialen Referenzpunkte zueinander vollständig definiert ist; Erstellen eines Modells des defekten Gebisses, wobei eine Modellhälfte für den Oberkiefer und eine Modellhälfte für den Unterkiefer hergestellt wird; Identifizieren der drei Cranialen Referenzpunkte des Oberkiefers an der Oberkiefermodellhälfte und Identifizieren der drei Cranialen Referenzpunkte des Unterkiefers an der Unterkiefemodellhälfte; Anordnen und Festlegen der Oberkiefermodellhälfte und der Unterkiefermodellhälfte relativ zueinander derart, dass die räumliche Stellung der sechs Cranialen Referenzpunkte zueinander mit der abgespeicherten räumlichen Lage übereinstimmt; Formen des Zahn- oder/und Knochenersatzes anhand der räumlich zueinander festgelegten Modellhälften, so dass die räumliche Stellung der sechs Cranialen Referenzpunkte erhalten bleibt.

Die relative räumliche Lage der sechs Cranialen Referenzpunkte ist definiert durch die obere Ebene, die von den Cranialen Referenzpunkten des Oberkiefers aufgespannt wird, und die untere Ebene, die von den Cranialen Referenzpunkten des Unterkiefers aufgespannt wird, und von den Abständen zu den beiden Ebenen des linken Schnittpunkts, in dem sich die Gerade vom linken oberen Direktionspunkt zum unteren Induktionspunkt und die Gerade vom linken unteren Direktionspunkt zum oberen Induktionspunkt schneiden, und von den Abständen zu den beiden Ebenen des rechten Schnittpunkts, in dem sich die Gerade vom rechten oberen Direktionspunkt zum unteren Induktionspunkt und die Gerade vom rechten unteren Direktionspunkt zum oberen Induktionspunkt schneiden. Zum Speichern der relativen räumlichen Lage der sechs Cranialen Referenzpunkte der erfindungsgemäße Schablonenkörper gebildet wird, dessen Eckpunkte mit den Koordinaten der sechs Cranialen Referenzpunkte zusammenfallen. Die Kanten des Schablonenkörpers werden bevorzugt von der Geraden vom linken oberen Direktionspunkt zum unteren Induktionspunkt, der Geraden vom linken unteren Direktionspunkt zum oberen Induktionspunkt, der Geraden vom rechten oberen Direktionspunkt zum unteren Induktionspunkt und der Geraden vom rechten unteren Direktionspunkt zum oberen Induktionspunkt gebildet.

Alternativ ist es bevorzugt, dass die relative räumliche Lage der sechs Cranialen Referenzpunkte definiert ist durch jeweils drei Raumkoordinaten der sechs Cranialen Referenzpunkte. Außerdem wird das Erfassen der Cranialen Referenzpunkte bevorzugtermaßen mit einem bildgebenden Verfahren durchgeführt, insbesondere mit einem digitalen Volumentomographieverfahren.

Der erfindungsgemäße Schablonenkörper ist zum Speichern der relativen räumlichen Lage der sechs Cranialen Referenzpunkte des Gebisses vorgesehen, wobei die Eckpunkte des Schablonenkörpers mit den Raumkoordinaten der sechs Cranialen Referenzpunkte des Gebisses zusammenfallen.

Bevorzugtermaßen sind Kanten des Schablonenkörpers von der Geraden vom linken oberen Direktionspunkt zum unteren Induktionspunkt, der Geraden vom linken unteren Direktionspunkt zum oberen Induktionspunkt, der Geraden vom rechten oberen Direktionspunkt zum unteren Induktionspunkt und der Geraden vom rechten unteren Direktionspunkt zum oberen Induktionspunkt gebildet. Ferner ist es bevorzugt, dass der Schablonenkörper den linken Schnittpunkt und den rechten Schnittpunkt aufweist, wobei der linke Schnittpunkt auf der Kante vom linken oberen Direktionspunkt zum unteren Induktionspunkt und der Kante vom linken unteren Direktionspunkt zum oberen Induktionspunkt liegt und der rechte Schnittpunkt auf der Kante vom rechten oberen Direktionspunkt zum unteren Induktionspunkt und der Kante vom rechten unteren Direktionspunkt zum oberen Induktionspunkt liegt.

Die erfindungsgemäße Übertragungsvorrichtung ist zum Anordnen der Oberkiefermodellhälfte relativ zu der Unterkiefermodellhälfte vorgesehen und weist den Schablonenkörper, eine Abgreifvorrichtung mit mindestens drei von der Abgreifvorrichtung vorstehenden Abgreifspitzen und eine Halterung auf, an der die Abgreifvorrichtung befestigbar und mit der die Abgreifvorrichtung beweglich gelagert ist, sodass mit den Abgreifspitzen Craniale Referenzpunkte der Oberkiefermodellhälfte, der Unerkiefermodellhälfte und Eckpunkte des Schablonenkörpers abgreifbar sind.

Die Halterung weist bevorzugt eine Halteschiene auf, an deren Längsenden die Abgreifvorrichtung lösbar wechselseitig befestigbar ist. Ferner ist es bevorzugt, dass die Halterung eine Lagerung zum Lagern der Halteschiene aufweist, die derart eingerichtet ist, dass die Halteschiene in die Längsrichtung und senkrecht zur Längsrichtung vertikal und horizontal beweglich ist. Die Abgreifvorrichtung ist ferner bevorzugt eine Abgreifgabel und die Übertragungsvorrichtung weist ferner bevorzugt eine zweite Abgreifgabel mit mindestens drei Abgreifspitzen auf, mit denen die Abgreifspitzen der ersten Abgreifgabel abgreifbar sind. Hierbei ist es bevorzugt, dass die Halterung eine zweite Halteschiene aufweist, an dessen einem Längsende die zweite Abgreifgabel befestigt ist und die Halterung eine Lagerung zum Lagern der zweiten Halteschiene aufweist, die derart eingerichtet ist, dass die zweite Halteschiene in die und senkrecht zur Längsrichtung vertikal und horizontal beweglich ist.

Zum Referenzierungszeitpunkt ab Beendigung des Knochenwachstums der Person mit ca. 18 Jahren kann das Gebiss mit einem bildgebenden Verfahren erfasst und die Cranialen Referenzpunkte können bestimmt werden. In diesem Alter ist in der Regel von einer Konstellation des Gebisses der Person auszugehen, bei der eine Fehlstellung des Gebisses aufgrund von Verschleiß noch nicht merklich zutage tritt. In dem Alter, bei dem die Cranialen Referenzpunkte zu bestimmen sind, sollte der Defekt des Gebisses noch nicht vorliegen. Mit der abgespeicherten räumlichen Lage der Cranialen Referenzpunkte ist nun für die Person die relative Zuordnung des Unterkiefers zum Oberkiefer in der Idealposition verfügbar. Sollte sich im Laufe des Lebens der Person ein Defekt des Gebisses einstellen, durch den die Idealposition des Unterkiefers relativ zum Oberkiefer nicht mehr gegeben ist, lässt sich diese erfindungsgemäß unter Zuhilfenahme der Cranialen Referenzpunkte des Gebisses wiederherstellen, dass dann mit dem Zahn- oder/und Knochenersatz versehenen ist. Dadurch erhält die Person mit dem Zahn- oder/und Knochenersatzersatz eine Neupositionierung seines/ihres Unterkiefers relativ zum Oberkiefer, wobei zuvor etwaig aufgetretene Fehlstellungen des Kiefergelenks korrigiert sind. Dadurch werden unter Umständen eine von den Fehlstellungen verursachte Beeinträchtigung im gesamten Gelenk- und Wirbelsäulensystem, Craniomandibuläre Dysfunktionen (CMD) sowie damit verbundene muskuläre Verspannungen und Kopfschmerzen behoben, wodurch das Wohlbefinden der Person gesteigert wird.

Die Verbindungsgeraden der Direktionspunkte des Oberkiefers mit dem Induktionspunkt des Unterkiefers und die Verbindungsgeraden der Direktionspunkte des Unterkiefers mit dem Induktionspunkt des Oberkiefers bilden jeweils ein Dreieck, dessen Schenkel sich in den Schnittpunkten kreuzen. Die Lage der Schnittpunkte relativ zu den Direktionspunkten und den Induktionspunkten verändert sich im Laufe des Lebens der Person nicht, so dass mit der Lage der Schnittpunkte die optimale dreidimensionale Zuordnung des Unterkiefers zum Oberkiefer stets definiert ist. Mit dem Schablonenkörper sind mit seinen Eckpunkten die Cranialen Referenzpunkte fest definiert und sind somit bei Aufbewahrung des Schablonenkörpers jederzeit abrufbar.

Das erfindungsgemäße Verfahren ist besonders erfolgreich beim Aufstellen von Zähnen in der Totalprothetik, bei dem die kompletten Zahnreihen jeweils des Oberkiefers und des Unterkiefers wiederherzustellen sind. Mit dem erfindungsgemäßen Verfahren ist es möglich, Zahnformen, die Bisshöhe, die Zahnpositionen und die Stellungen des Zahn- oder/und Knochenersatzersatzes so festzulegen, dass die Person mit dem Zahn- oder/und Knochenersatzersatz wieder eine optimale Ausrichtung des Kiefergelenks erhält. Dadurch ist die Eingewöhnung des Zahn- oder/und Knochenersatzes für die Person einfach zu bewältigen, da der Zahn- oder/und Knochenersatz optimal auf die anatomischen Randbedingungen angepasst ist.

Im Folgenden wird die Erfindung anhand der beigefügten schematischen Zeichnungen näher erläutert. Es zeigen:
Figur 1 eine dreidimensionale Darstellung eines Schablonenkörpers,
Figuren 2 bis 5 eine Übertragungsvorrichtung mit Details zum Anordnen einer Oberkiefermodellhälfte relativ zu einer Unterkiefermodellhälfte und

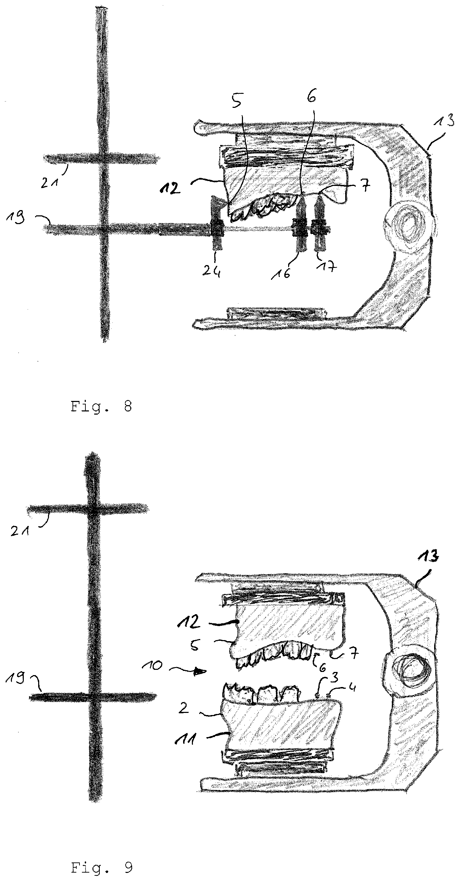

Figuren 6 bis 9 Schritte eines Verfahrens zum Herstellen von Zahnersatz mit der Übertragungsvorrichtung aus Figuren 2 bis 5.

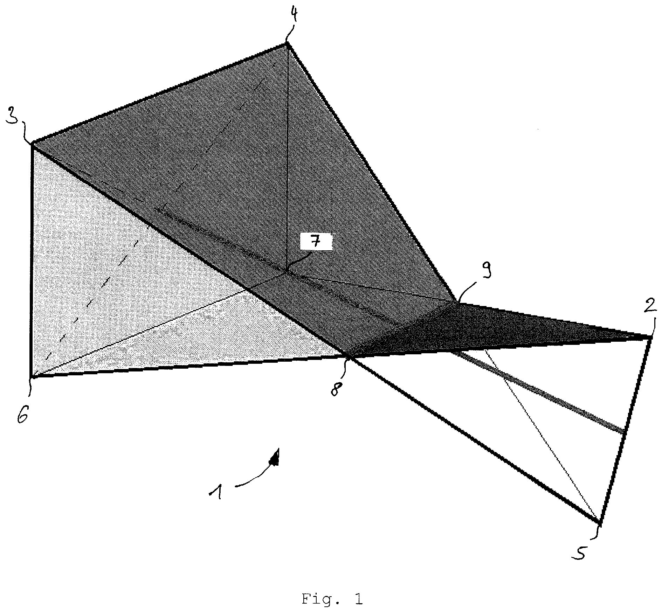

Wie es aus Figur 1 ersichtlich ist, weist ein Schablonenkörper 1 sechs Ecken auf. Die räumliche Lage der sechs Ecken entspricht der räumlichen Lage von sechs Cranialen Referenzpunkten 2 bis 7 eines Gebisses einer Person, deren Knochenwachstum gerade beendet ist. Dies ist bei den meisten Menschen im Alter von ca. 18 Jahren der Fall. Die räumlichen Koordinaten der Cranialen Referenzpunkte 2 bis 7 des Gebisses können beispielsweise mit Hilfe von Schablonen oder eines bildgebenden Verfahrens ermittelt werden.

Die sechs Ecken des Schablonenkörpers 1 entsprechen den sechs Cranialen Referenzpunkten 2 bis 7. In Figur 1 gesehen ist der erste Craniale Referenzpunkt ein oberer Induktionspunkt 2 eines Oberkiefers, der zweite Craniale Referenzpunkt der linke obere Direktionspunkt 3 des Oberkiefers, der dritte Craniale Referenzpunkt ein rechter oberer Direktionspunkt 4 des Oberkiefers. Ferner ist der vierte Craniale Referenzpunkt ein unterer Induktionspunkt 5 eines Unterkiefers, der fünfte Craniale Referenzpunkt ein linker unterer Direktionspunkt 6 des Unterkiefers und der sechste Craniale Referenzpunkt ein rechter unterer Direktionspunkt 7 des Unterkiefers. Eine erste Kante des Schablonenkörpers 1 ist gebildet von der Geraden vom linken oberen Direktionspunkt 3 zum unteren Induktionspunkt 5, eine zweite Kante des Schablonenkörpers ist gebildet von der Geraden vom linken unteren Direktionspunkt 6 zum oberen Induktionspunkt 2. Die erste Kante und die zweite Kante schneiden sich in einem linken Schnittpunkt 8. Ferner ist eine dritte Kante des Schablonenkörpers 1 gebildet von der Gerade vom rechten oberen Direktionspunkt 4 zum unteren Induktionspunkt 5 und eine vierte Kante des Schablonenkörpers 1 ist gebildet vom rechten unteren Direktionspunkt 7 zum oberen Induktionspunkt 2. Die dritte und die vierte Kante schneiden sich im rechten Schnittpunkt 9.

Die relative räumliche Lage der Schnittpunkte 8 und 9 bezogen auf die Cranialen Referenzpunkten 2 bis 7 bleibt unverändert und definiert die Lage des Unterkiefers des Gebisses relativ zum Oberkiefer des Gebisses. Im Allgemeinen ist die Lage der Schnittpunkte 8 und 9 bei jeder Person individuell. Durch die Bildung des Schablonenkörpers 1 individuell für die Person ist mit dem Schablonenkörper 1 die Lage des Unterkiefers relativ zum Oberkiefer für den Zustand des Gebisses gespeichert, in dem es noch keinen Defekt hat und die Kiefer optimal zueinander räumlich stehen. Mit dem Schablonenkörper 1 ist nun die individuelle und optimale Ausrichtung der Kiefer für die Lebensphase der Person gespeichert, in der sich beispielsweise alterungsbedingt Defekte und somit Fehlstellungen der Kiefer einstellen.

Für ein Gebiss mit einem Defekt können die räumlichen Lagen der aktuellen Cranialen Referenzpunkte ermittelt werden. Ein Vergleich der räumlichen Lage eines jeden Cranialen Referenzpunkts mit den Ecken des Schablonenkörpers 1 ergibt den Grad einer Fehlstellung des Kiefers, die durch den Defekt des Gebisses verursacht wird.

Ein Zahn- oder/und Knochenersatz ist für das Gebiss vorzusehen, mit dem der Defekt des Gebisses kompensiert werden soll. Der Zahnersatz kann beispielsweise ein einzelner Zahn, ein Teil von einem Zahn oder eine Vollprothese sein. Bei der Herstellung des Zahnersatzes wird ein Gebissmodell 10 des Gebisses gefertigt, wobei der Oberkiefer mit einer Oberkiefermodellhälfte 11 und der Unterkiefer mit einer Unterkiefermodellhälfte 12 modelliert wird. Der Kiefer mit dem Kiefergelenk ist in einem Kiefermodell 13 modelliert, wobei die Oberkiefermodellhälfte 11 und die Unterkiefermodellhälfte 12 von dem Kiefermodell 13 gehalten und via das Kiefermodellengelenk verbunden sind.

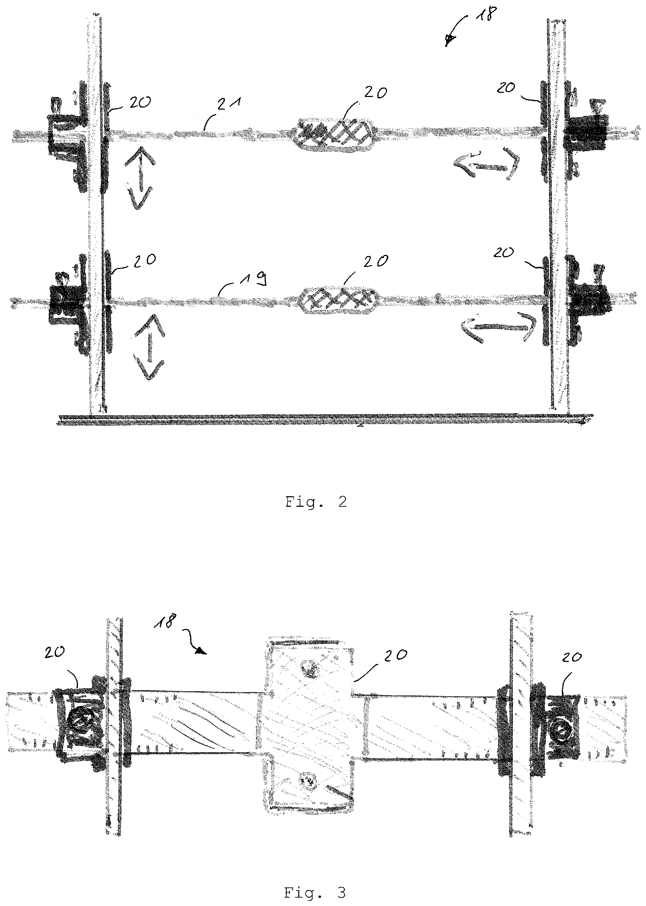

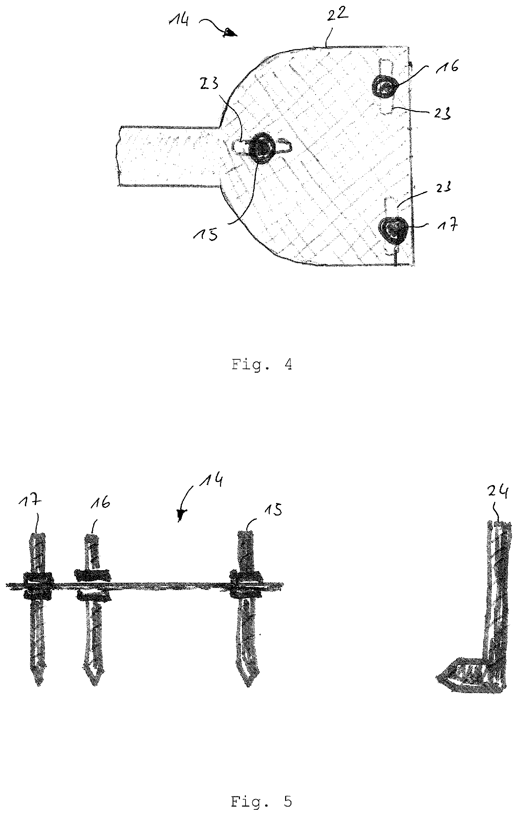

In Figuren 2 bis 5 ist eine Übertragungsvorrichtung zum Anordnen der Oberkiefermodellhälfte 11 und der Unterkiefermodellhälfte 12 gezeigt. Die Übertragungsvorrichtung weist eine Abgreifgabel 14 auf, die eine erste Abgreifspitze 15, eine zweite Abgreifspitze 16 und eine dritte Abgreifspitze 17 aufweist. Die Abgreifspitzen 15 bis 17 sind als spitz zulaufende Gewindestangen ausgeführt, die in Langlöchern 22 einer Platte 22 der Abgreifgabel 14 parallel zueinander verlaufend fest geschraubt sind, wobei die Spitzen der Abgreifspitzen 15 bis 17 in dieselbe Richtung zeigen. Ferner ist eine vierte Abgreifspitze 24 vorgesehen, die L-förmig ausgebildet ist und zum Ersatz für die erste Abgreifspitze 15 in das Langloch 23 für die erste Abgreifspitze 15 einbaubar ist. Für die Abgreifspitzen 15 bis 17 und 24 sind Muttern vorgesehen, mit denen die Abgreifspitzen 15 bis 17 und 24 in ihre zugeordneten Langlöcher 23 der Platte 22 festschraubbar sind.

Die Übertragungsvorrichtung weist ferner eine Halterung 18 und zwei Halteschienen 19 und 21 auf, die jeweils an senkrechten Holmen der Übertragungsvorrichtung mit Lager 20 vertikalverschiebbar gelagert sind. An den Halteschienen 19 und 21 ist jeweils eine Lagerung 20 vorgesehen, mit der die Abgreifgabel 14 an den Halteschienen 19 und 21 festlegbar und horizontalverschiebbar gelagert ist. Durch die Horizontalverschiebbarkeit der Halteschienen 19 und 21 an den Holmen, der Vertikalverschiebbarkeit der Abgreifgabel 14 an den Halteschienen 19 und 21 und der Verschiebbarkeit der Abgreifstifte 15 bis 17 und 24 in den Langlöchern 23 quer und parallel zur Platte 22 ist eine Einstellbarkeit der räumlichen Lage der Spitzen der Abgreifspitzen 15 bis 17 und 24 erreicht.

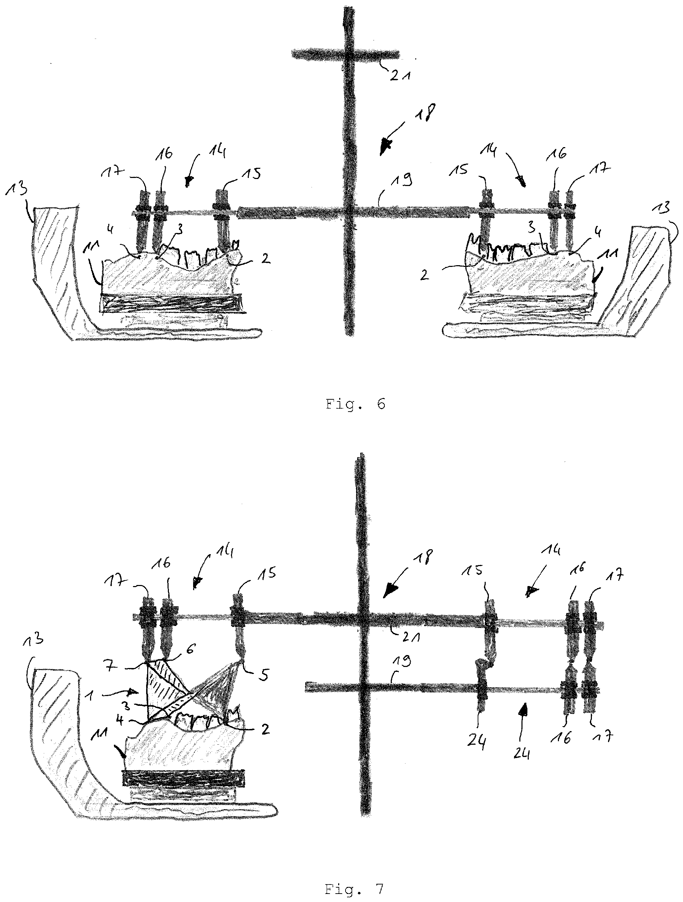

Zum Anordnen der Oberkiefermodellhälfte 11 relativ zur Unterkiefermodellhälfte 12 im Kiefermodell 13 wird in einem ersten Schritt die Oberkiefermodellhälfte 11 einartikuliert und an die Übertragungsvorrichtung in eine erste Position (in Figur 6 links) gelegt, wobei die Zähne des Oberkiefermodells 11 von oben her zugänglich sind. An der Oberkiefermodelhälfte 11 sind die Cranialen Referenzpunkte 2 bis 4 gekennzeichnet, was beispielsweise durch ein Anlegen einer zahnreihenunabhängigen Schablone des Oberkiefers mit entsprechenden Markierungen der Cranialen Referenzpunkte aus einer Ausgangsspeicherung erreicht wird. Die Abgreifgabel 14 wird so mit der Lagerung 20 an der ersten Halteschiene 19 befestigt und die Abgreifspitzen 15 bis 17 in ihren Langlöchern 23 so positioniert und an der Platte 22 befestigt, dass die Spitzen der Abgreifspitzen 15 bis 17 jeweils einen der Cranialen Referenzpunkte 2 bis 4 berühren. Die erste Abgreifspitze 15 ist für den oberen Induktionspunkt 2, die zweite Abgreifspitze 16 ist für den linken oberen Direktionspunkt 3 und die dritte Abgreifspitze 17 ist für den rechten oberen Direktionspunkt 4 vorgesehen.

Der Oberkiefermodellhälfte 11 gegenüberliegend und zur ersten Halteschiene 19 quasi spiegelverehrt wird in einem zweiten Schritt ein Arbeitsmodell einartikuliert, das der Oberkiefermodellhälfte 11 nachgebildet ist und an dem mit einer zahnreihenunabhängigen Schablone des Oberkiefers entsprechende Markierungen der Cranialen Referenzpunkte aus einer Ausgangsspeicherung angebracht sind, in eine zweite Position an die Übertragungsvorrichtung gelegt. Das Arbeitsmodell entspricht der Oberkiefermodellhälfte 11 und ist diesem exakt nachgebildet, wobei je nach Zahnbestand der Oberkiefermodellhälfte 11 einzelne Zähne zu radieren sind, damit die Cranialen Referenzpunkte 2 bis 4 der Oberkiefermodellhälfte 11 für den Schablonenkörper 1 zugänglich sind. Das Arbeitsmodell 14 dient also dazu diese eventuell notwendigen Radierungen nicht an der Oberkiefermodellhälfte 11 selbst anbringen zu müssen. Die Abgreifgabel 14 wird von der Oberkiefermodellhälfte 11 in die zweite Position an die Lagerung 20 gesteckt. Dabei wird das Arbeitsmodell so positioniert, dass die Abgreifspitzen 15 bis 17 die Cranialen Referenzpunkte 2 bis 4 des Arbeitsmodells berühren, so wie sie die Cranialen Referenzpunkte 2 bis 4 der Oberkiefermodellhälfte 11 berührten. Sobald die Anordnung des Oberkiefermodells 11 oder des Arbeitsmodells in der zweiten Position abgeschlossen ist, ist die Abgreifgabel 14 von der Lagerung 20 zu entfernen.

Auf das Arbeitsmodell wird in einem dritten Schritt der Schablonenkörper 1 gelegt, so dass die Ecken des Schablonenkörpers 1 die ihnen zugeordneten Cranialen Referenzpunkte 2 bis 4 der Oberkiefermodellhälfte 11 berühren. Dadurch stehen diejenigen Ecken des Schablonenkörpers 1 nach oben vor, die den Cranialen Referenzpunkten 5 bis 7 zugeordnet sind. Die Abgreifgabel 14 ist nun mit der Lagerung 20 der zweiten Halteschiene 21 zu befestigen, wobei die zweite Halteschiene 21 oberhalb der ersten Halteschiene 19 und die Abgreifgabel 14 oberhalb des Schablonenkörpers 1 angeordnet ist. Die Abgreifspitzen 15 bis 17 sind so zu verstellen, dass mit ihren Spitzen die ihnen zugeordneten Ecken des Schablonenkörpers 1 berühren. So soll die erste Abgreifspitze 15 den unteren Induktionspunkt 5, die zweite Abgreifspitze 16 den linken unteren Direktionspunkt 6 und die dritte Abgreifspitze 17 den rechten unteren Direktionspunkt 7 berühren.

In einem vierten Schritt wird die Abgreifgabel 14 von der Lagerung 20 der oberen Halteschiene 21 entfernt und gegenüberliegend wieder an die Lagerung 20 der oberen Halteschiene 21 angebracht, so dass die Abgreifgabel 14 mit ihren Abgreifspitzen 15 bis 17 die Lagen der unteren Cranialen Referenzpunkte 5 bis 7 der Unterkiefermodellhälfte 12 in der ersten Position definiert. Da der untere Induktionspunkt 5 anatomisch bedingt in der Conclusionsebene des Gebisses liegt, ist es nicht möglich an die Abgreifspitzen 15 bis 17 die Unterkiefermodellhälfte 12 direkt anzulegen.

Somit wird in einer weiteren Abgreifgabel 25 die Abgreifspitze für den unteren Induktionspunkt 5 durch eine abgewinkelte Abgreifspitze 24 ersetzt, deren Spitze zu dem unteren Induktionspunkt 5 zeigt. Die weitere Abgreifgabel 25 wird in einem fünften Schritt an der Lagerung 20 der ersten Halteschiene 19 derart befestigt und die Abgreifspitzen 16, 17 und 24 der weiteren Abgreifgabel 25 werden derart in Position gebracht, dass die Spitzen der Abgreifspitzen 16, 17, 24 die Spitzen der Abgreifspitzen der oberen Abgreifgabel 14 berühren und nach oben stehen.

In einem Zwischenschritt wird nun die Abgreifgabel aus der Lagerung 20 der Halteschiene 21 entfernt, um Platz für die Einartikulation in das Kiefermodell 13 aus der ersten Position zu schaffen. Nun gilt es für einen sechsten Schritt die Unterkiefermodellhälfte 12 mit den entsprechenden Markierungen der Cranialen Referenzpunkte aus der Ausgangsspeicherung einer zahnreihenunabhängigen Schablone des Unterkiefers an den unteren Cranialen Direktionspunkten 6 und 7 und dem unteren Cranialen Induktionspunkt 5 mit Spitzen der Abgreifspitzen 16, 17 und 24 auszurichten und in das Kiefermodellunterteil des Kiefermodells 13 einzuartikulieren. Dann wird die Abgreifgabel 25 in einem weiteren Zwischenschritt aus der Lagerung 20 der ersten Halteschiene 19 entfernt und die einartikulierte Oberkiefermodellhälfte 11 aus dem ersten Schritt in das Kiefermodelloberteil des Kiefermodell 13, das wieder in der ersten Position aus dem ersten Schritt angeordnet ist, eingefügt.

Gemäß einer alternativen Ausführungsform des Übertragungssystems ist der erste Schritt beim Anordnen der Oberkiefermodellhälfte 11 relativ zur Unterkiefermodellhälfte 12 identisch mit der vorhergehend beschriebenen Ausführungsform. Die Längen der Abgreifspitzen 15 bis 17 sind nun auf eine definierte Länge festgelegt. Im darauffolgendem Schritt wird auf den Spitzen der Abgreifspitzen 15 bis 17, welche die Cranialen Referenzpunkte 2 bis 4 erfassen, der Schablonenkörper 1 so positioniert, dass die Ecken des Schablonenkörpers 1 die ihnen zugeordneten Cranialen Referenzpunkte 2 bis 4 der Oberkiefermodellhälfte 11 widerspiegeln. Dadurch stehen diejenigen Ecken des Schablonenkörpers 1 nach oben vor, die den Cranialen Referenzpunkten 5 bis 7 zugeordnet sind.

In einem zweiten Schritt ist die Abgreifgabel 14 in der Lagerung 20 der zweiten Halteschiene 21 zu befestigen, wobei die zweite Halteschiene 21 oberhalb der ersten Halteschiene 19 und die Abgreifgabel 14 oberhalb des Schablonenkörpers 1 angeordnet sind. Die Abgreifspitzen 15 bis 17 sind so zu verstellen, dass mit ihren Spitzen die ihnen zugeordneten Ecken des Schablonenkörpers 1 berührt werden. So soll die erste Abgreifspitze 15 den unteren Induktionspunkt 5, die zweite Abgreifspitze 16 den linken unteren Direktionspunkt 6 und die dritte Abgreifspitze 17 den rechten unteren Direktionspunkt 7 berühren.

Ein dritter Schritt beinhaltet das gleiche Vorgehen wie beim vierten Schritt der vorhergehend beschriebenen Ausführungsform, nur dass die Abgreifgabel 14 nicht aus der Lagerung 20 entfernt und umgesetzt werden muss, da die Übertragung der Cranialen Referenzpunkte 5 bis 7 nur auf einer Seite dieses Übertragungssystems stattfindet. Die Abgreifgabel 14 mit ihren Abgreifspitzen 15 bis 17 definiert die Lagen der unteren Cranialen Referenzpunkte 5 bis 7 der Unterkiefermodellhälfte 12 in der ersten Position. Da der untere Induktionspunkt 5 anatomisch bedingt in der Conclusionsebene des Gebisses liegt, ist es nicht möglich an die Abgreifspitzen 15 bis 17 die Unterkiefermodellhälfte 12 direkt anzulegen.

Somit wird mit der weiteren Abgreifgabel 25 die Abgreifspitze 15 für den unteren Induktionspunkt 5 durch die abgewinkelte Abgreifspitze 24 ersetzt, deren Spitze zu dem Induktionspunkt 5 zeigt. Die weitere Abgreifgabel 25 wird in einem vierten Schritt an der Lagerung 20 der ersten Halteschiene 19 derart befestigt und die Abgreifspitzen 16, 17 und 24 der weiteren Abgreifgabel 25 werden derart in Position gebracht, dass die Spitzen der Abgreifspitzen 16, 17, 24 die Spitzen der Abgreifspitzen der oberen Abgreifgabel 14 berühren und nach oben stehen.

Ein fünfter Schritt beinhaltet ein um die festgelegte Länge der Abgreifspitzen 16, 17, 24 nach unten Versetzen der Halteschiene 19. Dadurch wird die Lage der Oberkiefermodellhälfte 11 zur Unterkiefermodellhälfte 12 in die ursprüngliche Relation gesetzt, da sie im ersten Schritt um die festgelegte Länge der Abgreifspitzen 16, 17, 24 vertikal nach oben gespiegelt wurde.

Der sechste Schritt ist identisch mit dem sechsten Schritt der vorhergehend beschriebenen Ausführungsform und beginnt mit einem Zwischenschritt, in dem nun die Abgreifgabel 14 aus der Lagerung 20 der Halteschiene 21 entfernt wird, um Platz für die Einartikulation in das Kiefermodell 13 aus der ersten Position zu schaffen. Nun gilt es für diesen Schritt die Unterkiefermodellhälfte 12 mit den entsprechenden Markierungen der Cranialen Referenzpunkte aus der Ausgangsspeicherung einer zahnreihenunabhängigen Schablone des Unterkiefers an den unteren Cranialen Direktionspunkten 6 und 7 und dem unteren Cranialen Induktionspunkt 5 mit den Spitzen der Abgreifspitzen 16, 17 und 24 auszurichten und in das Kiefermodellunterteil des Kiefermodells 13 einzuartikulieren. Dann wird die Abgreifgabel 25 in einem weiteren Zwischenschritt aus der Lagerung 20 der ersten Halteschiene 19 entfernt und die einartikulierte Oberkiefermodellhälfte 11 aus dem ersten Schritt in das Kiefermodelloberteil des Kiefermodells 13, das wieder in der ersten Position aus dem ersten Schritt angeordnet ist, eingefügt.

Es ist darauf zu achten, dass die Lage des Oberkiefermodells 11 in dem Kiefermodell 13 in Beziehung zur Übertragungsvorrichtung reproduzierbar ist. Dies kann beispielsweise durch Aussparungen in einer horizontalen Unterlage, mit denen sowohl die Anordnung des Kiefermodell 13 als auch die Anordnung des Übertragungssystem erfasst sind, oder das Vorsehen von entsprechenden Passstiften mit dazugehörigen Bohrungen zwischen der Unterlage und dem Kiefermodell 13 und zwischen Unterlage und dem Übertragungssystem erzielt werden.

Damit ist nach Durchführung der Schritte eine Positionierung der Unterkiefermodellhälfte 11 relativ zur Oberkiefermodellhälfte 12 erreicht, wobei die Cranialen Referenzpunkte 2 bis 7 des Gebisses in ihren relativen Lagen zueinander angeordnet sind, wie sie von dem Schablonenkörper 1 definiert sind. Mit der Übertragungsvorrichtung kann somit der ursprüngliche Biss der Person zum Referenzzeitpunkt mit ca. 18 Jahren mit Hilfe des Schablonenkörpers 1 ermittelt werden. Es ist ebenfalls denkbar die Übertragung mit dem Schablonenkörper 1 sowie die Kiefermodellhälften 11, 12 rechnergestützt zu simulieren, so dass die Schritte virtuell durchgeführt werden.

Ein Zahnersatz für das Gebiss kann nun auf Basis der zueinander angeordneten Kiefermodellhälften 11, 12 hergestellt werden, wobei das Gebiss mit dem Zahnersatz den Biss hat, der dem ursprünglichen Biss der Person zum Referenzzeitpunkt mit ca. 18 Jahren entspricht.

### Bezugszeichenliste

- 1: Schablonenkörper
- 2: erster Cranialer Referenzpunkt, oberer Induktionspunkt
- 3: zweiter Cranialer Referenzpunkt, linker oberer Direktionspunkt
- 4: dritter Cranialer Referenzpunkt, rechter oberer Direktionspunkt
- 5: vierter Cranialer Referenzpunkt, unterer Induktionspunkt
- 6: fünfter Cranialer Referenzpunkt, linker unterer Direktionspunkt
- 7: sechster Cranialer Referenzpunkt, rechter unterer Direktionspunkt
- 8: linker Schnittpunkt
- 9: rechter Schnittpunkt
- 10: Gebissmodell
- 11: Oberkiefermodellhälfte
- 12: Unterkiefermodellhälfte
- 13: Kiefermodell
- 14: Abgreifgabel
- 15: erste Abgreifspitze
- 16: zweite Abgreifspitze
- 17: dritte Abgreifspitze
- 18: Halterung
- 19: erste Halteschiene
- 20: Lagerung
- 21: zweite Halteschiene
- 22: Platte
- 23: Langloch
- 24: vierte Abgreifspitze
- 25: weitere Abgreifgabel

## Patentansprüche

1. Verfahren zum Herstellen von Zahn- oder/und Knochenersatz für ein Gebiss mit einem Defekt, wobei das Gebiss einen Oberkiefer und einen Unterkiefer aufweist, mit den Schritten:
- Erfassen des linken und des rechten Direktionspunkts (3, 4) sowie eines Induktionspunkts (2) des Oberkiefers als drei Craniale Referenzpunkte des Oberkiefers und Erfassen des linken und des rechten Direktionspunkts (6, 7) sowie eines Induktionspunkts (5) des Unterkiefers als drei Craniale Referenzpunkte des Unterkiefers, wobei der Zeitpunkt des Erfassens der sechs Cranialen Referenzpunkte (2 bis 7) zu einem Zeitpunkt erfolgt, bei dem der Defekt noch nicht vorliegt;
- Speichern der relativen räumlichen Lage der sechs Cranialen Referenzpunkte (2 bis 7), so dass die räumliche Stellung der sechs Cranialen Referenzpunkte (2 bis 7) zueinander vollständig definiert ist; wobei die relative räumliche Lage der sechs Cranialen Referenzpunkte (2 bis 7) definiert ist durch die obere Ebene, die von den Cranialen Referenzpunkten (2 bis 4) des Oberkiefers aufgespannt wird, und die untere Ebene, die von den Cranialen Referenzpunkten (5 bis 7) des Unterkiefers aufgespannt wird, und von den Abständen zu den beiden Ebenen des linken Schnittpunkts (8), in dem sich die Gerade vom linken oberen Direktionspunkt (3) zum unteren Induktionspunkt (5) und die Gerade vom linken unteren Direktionspunkt (6) zum oberen Induktionspunkt (2) schneiden, und von den Abständen zu den beiden Ebenen des rechten Schnittpunkts (9), in dem sich die Gerade vom rechten oberen Direktionspunkt (4) zum unteren Induktionspunkt (5) und die Gerade vom rechten unteren Direktionspunkt (7) zum oberen Induktionspunkt (2) schneiden, wobei zum Speichern der relativen räumlichen Lage der sechs Cranialen Referenzpunkte (2 bis 7) ein Schablonenkörper (1) gebildet wird, dessen Eckpunkte mit den Koordinaten der sechs Cranialen Referenzpunkte (2 bis 7) zusammenfallen ;
- Erstellen eines Modells (10) des defekten Gebisses, wobei eine Modellhälfte (11) für den Oberkiefer und eine Modellhälfte (12) für den Unterkiefer hergestellt wird;
- Identifizieren der drei Cranialen Referenzpunkte (2 bis 4) des Oberkiefers an der Oberkiefermodellhälfte (11) und Identifizieren der drei Cranialen Referenzpunkte (5 bis 7) des Unterkiefers an der Unterkiefermodellhälfte (12);
- Anordnen und Festlegen der Oberkiefermodellhälfte (11) und der Unterkiefermodellhälfte (12) relativ zueinander derart, dass die räumliche Stellung der sechs Cranialen Referenzpunkte (2 bis 7) zueinander mit der abgespeicherten räumlichen Lage übereinstimmt;
- Formen des Zahn- oder/und Knochenersatzes anhand der räumlich zueinander festgelegten Modellhälften, so dass die räumliche Stellung der sechs Cranialen Referenzpunkte (2 bis 7) erhalten bleibt.

2. Verfahren gemäß Anspruch 1, wobei Kanten des Schablonenkörpers von der Gerade vom linken oberen Direktionspunkt (3) zum unteren Induktionspunkt (5), der Gerade vom linken unteren Direktionspunkt (6) zum oberen Induktionspunkt (2), der Gerade vom rechten oberen Direktionspunkt (4) zum unteren Induktionspunkt (5) und der Gerade vom rechten unteren Direktionspunkt (7) zum oberen Induktionspunkt (2) gebildet werden.

3. Verfahren gemäß Anspruch 1, wobei die relative räumliche Lage der sechs Cranialen Referenzpunkte (2 bis 7) definiert ist durch jeweils drei Raummkoordinaten der sechs Cranialen Referenzpunkte.

4. Verfahren gemäß einem der Ansprüche 1 bis 3, wobei das Erfassen der Cranialen Referenzpunkte (2 bis 7) mit einem bildgebenden Verfahren, insbesondere einem digitalen Volumentomographieverfahren, durchgeführt wird.

5. Schablonenkörper zum Speichern der relativen räumlichen Lage von sechs Cranialen Referenzpunkten (2 bis 7) eines wie in den Verfahrensansprüchen 1-4 definierten Gebisses, wobei die Eckpunkte des Schablonenkörpers (1) mit den Raumkoordinaten der sechs Cranialen Referenzpunkte (2 bis 7) des Gebisses zusammenfallen.

6. Schablonenkörper gemäß Anspruch 5, wobei Kanten des Schablonenkörpers von der Gerade vom linken oberen Direktionspunkt (3) zum unteren Induktionspunkt (5), der Gerade vom linken unteren Direktionspunkt (6) zum oberen Induktionspunkt (2), der Gerade vom rechten oberen Direktionspunkt (4) zum unteren Induktionspunkt (5) und der Gerade vom rechten unteren Direktionspunkt (7) zum oberen Induktionspunkt (2) gebildet sind.

7. Schablonenkörper gemäß Anspruch 6, wobei der Körper einen linken Schnittpunkt (8) und einen rechten Schnittpunkt (9) aufweist, wobei der linke Schnittpunkt (8) auf der Kante vom linken oberen Direktionspunkt (3) zum unteren Induktionspunkt (5) und der Kante vom linken unteren Direktionspunkt (6) zum oberen Induktionspunkt (2) liegt und der rechte Schnittpunkt (9) auf der Kante vom rechten oberen Direktionspunkt (4) zum unteren Induktionspunkt (5) und der Kante vom rechten unteren Direktionspunkt (7) zum oberen Induktionspunkt (2) liegt.

8. Übertragungsvorrichtung zum Anordnen einer Oberkiefermodellhälfte (11) relativ zu einer Unterkiefermodellhälfte (12), mit einem Schablonenkörper (1) gemäß einem der Ansprüche 5 bis 7, einer Abgreifvorrichtung (14) mit mindestens drei von der Abgreifvorrichtung (14) vorstehenden Abgreifspitzen (15 bis 17) und einer Halterung (18), an der die Abgreifvorrichtung (18) befestigbar und mit der die Abgreifvorrichtung (14) beweglich gelagert ist, dass mit den Abgreifspitzen (15 bis 17) Craniale Referenzpunkte (2 bis 7) der Oberkiefermodellhälfte (11), der Unterkiefermodellhälfte (12) und Eckpunkte des Schablonenkörpers (1) abgreifbar sind.

9. Übertragungsvorrichtung gemäß Anspruch 8, wobei die Halterung (18) eine Halteschiene (19) aufweist, an dessen Längsenden die Abgreifvorrichtung lösbar wechselseitig befestigbar ist.

10. Übertragungsvorrichtung gemäß Anspruch 9, wobei die Halterung (18) eine Lagerung (20) zum Lagern der Halteschiene (19) aufweist, die derart eingerichtet ist, dass die Halteschiene (19) in die und senkrecht zur Längsrichtung vertikal und horizontal beweglich ist.

11. Übertragungsvorrichtung gemäß einem der Ansprüche 8 bis 10, wobei die Abgreifvorrichtung eine Abgreifgabel (14) ist und die Übertragungsvorrichtung eine zweite Abgreifgabel (15) mit mindestens drei Abgreifspitzen (16, 17, 24) aufweist, mit denen die Abgreifspitzen (15 bis 17) der ersten Abgreifgabel (14) abgreifbar sind.

12. Übertragungsvorrichtung gemäß Anspruch 11, wobei die Halterung (18) eine zweite Halteschiene (21) aufweist, an dessen einem Längsende die zweite Abgreifgabel (25) befestigt ist und die Halterung eine Lagerung zum Lagern der zweiten Halteschiene (21) aufweist, die derart eingerichtet ist, dass die zweite Halteschiene (21) in die und senkrecht zur Längsrichtung vertikal und horizontal beweglich ist.

## Claims

1. A method for producing a dental or/and bone substitute for a dentition having a defect, the dentition comprising an upper jaw and a lower jaw, comprising the steps of:
- determining the left and right direction point (3, 4) and an induction point (2) of the upper jaw as three cranial reference points of the upper jaw, and determining the left and right direction point (6, 7) and an induction point (5) of the lower jaw as three cranial reference points of the lower jaw, wherein the time when the six cranial reference points (2 to 7) are determined is a time when the defect is not yet present;
- storing the relative spatial position of the six cranial reference points (2 to 7) in such a way that the spatial position of the six cranial reference points (2 to 7) relative to one another is completely defined; wherein the relative spatial position of the six cranial reference points (2 to 7) is defined by the upper plane which is generated by the cranial reference points (2 to 4) of the upper jaw and the lower plane which is generated by the cranial reference points (5 to 7) of the lower jaw, and by the distances from the two planes of the left intersection point (8) at which the straight line from the left upper direction point (3) to the lower induction point (5) and the straight line from the left lower direction point (6) to the upper induction point (2) intersect, and by the distances from the two planes of the right intersection point (9) at which the straight line from the right upper direction point (4) to the lower induction point (5) and the straight line from the right lower direction point (7) to the upper induction point (2) intersect, wherein a template body (1) the vertices of which coincide with the coordinates of the six cranial reference points (2 to 7) is formed for storing the relative spatial position of the six cranial reference points (2 to 7);
- creating a model (10) of the defective dentition, wherein a model half (11) for the upper jaw and a model half (12) for the lower jaw is produced;
- identifying the three cranial reference points (2 to 4) of the upper jaw at the upper jaw model half (11), and identifying the three cranial reference points (5 to 7) of the lower jaw at the lower jaw model half (12);
- arranging and fixing the upper jaw model half (11) and the lower jaw model half (12) relative to each other in such a way that the spatial position of the six cranial reference points (2 to 7) relative to each other corresponds to the stored spatial position;
- forming the dental or/and bone substitute based on the model halves which are spatially fixed relative to each other in such a way that the spatial position of the six cranial reference points (2 to 7) is maintained.

2. The method according to claim 1, wherein edges of the template body are formed by the straight line from the left upper direction point (3) to the lower induction point (5), by the straight line from the left lower direction point (6) to the upper induction point (2), by the straight line from the right upper direction point (4) to the lower induction point (5), and by the straight line from the right lower direction point (7) to the upper induction point (2).

3. The method according to claim 1, wherein the relative spatial position of the six cranial reference points (2 to 7) is defined by three spatial coordinates of the six cranial reference points, respectively.

4. The method according to any of claims 1 to 3, wherein the determining of the cranial reference points (2 to 7) is performed by an imaging method, and particularly a digital volume tomography method.

5. A template body for storing the relative spatial position of six cranial reference points (2 to 7) of a dentition according to any of claims 1 to 4, wherein the vertices of the template body (1) coincide with the spatial coordinates of the six cranial reference points (2 to 7) of the dentition.

6. The template body according to claim 5, wherein edges of the template body are formed by the straight line from the left upper direction point (3) to the lower induction point (5), by the straight line from the left lower direction point (6) to the upper induction point (2), by the straight line from the right upper direction point (4) to the lower induction point (5), and by the straight line from the right lower direction point (7) to the upper induction point (2).

7. The template body according to claim 6, wherein the body has a left intersection point (8) and a right intersection point (9), wherein the left intersection point (8) is on the edge from the left upper direction point (3) to the lower induction point (5) and the edge from the left lower direction point (6) to the upper induction point (2), and the right intersection point (9) is on the edge of the right upper direction point (4) to the lower induction point (5) and the edge from the right lower direction point (7) to the upper induction point (2).

8. A transmission apparatus for arranging an upper jaw model half (11) relative to a lower jaw model half (12), comprising a template body (1) according to any of claims 1 to 7, a gripping device (14) having at least three gripping tips (15 to 17) projecting from the gripping device (14), and a holder (18) to which the gripping device (18) can be fixed and by which the gripping device (14) is movably mounted so that cranial reference points (2 to 7) of the upper jaw model half (11), the lower jaw model half (12) and vertices of the template body (1) can be gripped by the gripping tips (15 to 17).

9. The transmission apparatus according to claim 8, wherein the holder (18) has a holding rail (19) at the longitudinal ends of which the gripping device can be mutually fixed in a detachable manner.

10. The transmission apparatus according to claim 9, wherein the holder (18) comprises a support (20) for supporting the holding rail (19), which is arranged in such a way that the holding rail (19) is movable vertically and horizontally in the longitudinal direction and perpendicularly to the longitudinal direction.

11. The transmission apparatus according to any of claims 8 to 10, wherein the gripping device is a gripping fork (14), and the transmission apparatus comprises a second gripping fork (15) having at least three gripping tips (16, 17, 24) by which the gripping tips (15 to 17) of the first gripping fork (14) can be gripped.

12. The transmission apparatus according to claim 11, wherein the holder (18) comprises a second holding rail (21) on whose one longitudinal end the second gripping fork (25) is fixed, and the holder comprises a support for supporting the second holding rail (21), which is arranged in such a way that the second holding rail (21) is movable vertically and horizontally in the longitudinal direction and perpendicularly to the longitudinal direction.

## Revendications

1. Procédé destiné à fabriquer des prothèses dentaires ou/et osseuses pour une mâchoire ayant un défaut, la mâchoire comprenant un maxillaire supérieur et un maxillaire inférieur, le procédé comprenant les étapes suivantes:
- déterminer les points directionnels (3, 4) de gauche et de droite et un point d'induction (2) du maxillaire supérieur comme trois points de référence crâniens du maxillaire supérieur, et déterminer les points directionnels (6, 7) de gauche et de droite et un point d'induction (5) du maxillaire inférieur comme trois points de référence crâniens du maxillaire inférieur, le temps de la détermination des six points de référence crâniens (2 à 7) étant un temps où le défaut n'est pas encore présent ;
- stocker la position spatiale relative des six points de référence crâniens (2 à 7) de telle manière que la position spatiale qu'ont les six points de référence crâniens (2 à 7) les uns par rapport aux autres soit définie complètement ; la position relative spatiale des six points de référence crâniens (2 à 7) étant définie par le plan supérieur défini par les points de référence crâniens (2 à 4) du maxillaire supérieur et par le plan inférieur défini par les points de référence crâniens (5 à 7) du maxillaire inférieur, et par les distances par rapport aux deux plans du point d'intersection (8) de gauche dans lequel se coupent la droite allant du point directionnel (3) supérieur de gauche au point d'induction (5) inférieur et la droite allant du point directionnel (6) inférieur de gauche au point d'induction (2) supérieur, et par les distances par rapport aux deux plans du point d'intersection (9) de droite dans lequel se coupent la droite allant du point directionnel (4) supérieur de droite au point d'induction (5) inférieur et la droite allant du point directionnel (7) inférieur de droite au point d'induction (2) supérieur, un corps de gabarit (1) les sommets duquel coïncident avec les coordonnées des six points de référence crâniens (2 à 7) étant formé pour stocker la position relative spatiale des six points de référence crâniens (2 à 7) ;
- établir un modèle (10) de la mâchoire défectueuse, une moitié du modèle (11) étant établie pour le maxillaire supérieur, et une moitié du modèle (12) étant établie pour le maxillaire inférieur ;
- identifier les trois points de référence crâniens (2 à 4) du maxillaire supérieur au niveau de la moitié du modèle (11) du maxillaire supérieur, et identifier les trois points de référence crâniens (5 à 7) du maxillaire inférieur au niveau de la moitié du modèle (12) du maxillaire inférieur ;
- disposer et fixer la moitié du modèle (11) du maxillaire supérieur et la moitié du modèle (12) du maxillaire inférieur l'une par rapport à l'autre de telle manière que la position spatiale des six points de référence crâniens (2 à 7) les uns par rapport aux autres corresponde à la position spatiale stockée ;
- modeler la prothèse dentaire ou/et osseuse sur la base des moitiés du modèle fixées spatialement l'une par rapport à l'autre de telle manière que la position spatiale des six points de référence crâniens (2 à 7) soit maintenue.

2. Procédé selon la revendication 1, dans lequel des bords du corps de gabarit sont formés par la droite allant du point directionnel (3) supérieur de gauche au point d'induction (5) inférieur, par la droite allant du point directionnel (6) inférieur de gauche au point d'induction (2) supérieur, par la droite allant du point directionnel (4) supérieur de droite au point d'induction (5) inférieur, et par la droite allant du point directionnel (7) inférieur de droite au point d'induction (2) supérieur.

3. Procédé selon la revendication 1, dans lequel la position spatiale relative des six points de référence crâniens (2 à 7) est définie par trois coordonnées spatiales des six points de référence crâniens, respectivement.

4. Procédé selon l'une des revendications 1 à 3, dans lequel la détermination des points de référence crâniens (2 à 7) est effectuée par un procédé d'imagerie, en particulier par un procédé de tomographie volumique numérisée.

5. Corps de gabarit destiné à stocker la position spatiale relative de six points de référence crâniens (2 à 7) d'une mâchoire selon l'une des revendications 1 à 4, les sommets du corps de gabarit (1) coïncidant avec les coordonnées spatiales des six points de référence crâniens (2 à 7) de la mâchoire.

6. Corps de gabarit selon la revendication 5, des bords du corps de gabarit étant formés par la droite allant du point directionnel (3) supérieur de gauche au point d'induction (5) inférieur, par la droite allant du point directionnel (6) inférieur de gauche au point d'induction (2) supérieur, par la droite allant du point directionnel (4) supérieur de droite au point d'induction (5) inférieur, et par la droite allant du point directionnel (7) inférieur de droite au point d'induction (2) supérieur.

7. Corps de gabarit selon la revendication 6, le corps comprenant un point d'intersection (8) de gauche et un point d'intersection (9) de droite, le point d'intersection (8) de gauche étant sur le bord allant du point directionnel (3) supérieur de gauche au point d'induction (5) inférieur et le bord du point directionnel (6) inférieur de gauche au point d'induction (2) supérieur, et le point d'intersection (9) de droite étant sur le bord allant du point directionnel (4) supérieur de droite au point d'induction (5) inférieur et le bord allant du point directionnel (7) inférieur de droite au point d'induction (2) supérieur.

8. Dispositif de transmission destiné à disposer une moitié du modèle (11) d'un maxillaire supérieur par rapport à une moitié du modèle (12) d'un maxillaire inférieur, comprenant un corps de gabarit (1) selon l'une des revendications 1 à 7, un dispositif de préhension (14) ayant au moins trois pointes de préhension (15 à 17) faisant saillie du dispositif de préhension (14), et un support (18) au niveau duquel peut être fixé le dispositif de préhension (18) et au moyen duquel est monté mobile le dispositif de préhension (14) de telle manière que des points de référence crâniens (2 à 7) de la moitié du modèle (11) du maxillaire supérieur, de la moitié du modèle (12) du maxillaire inférieur, et des sommets du corps de gabarit (1) puissent être saisis par les pointes de préhension (15 à 17).

9. Dispositif de transmission selon la revendication 8, dans lequel le support (18) comprend un rail de support (19) aux extrémités longitudinales duquel le dispositif de préhension peut être fixé mutuellement de manière amovible.

10. Dispositif de transmission selon la revendication 9, dans lequel le support (18) comprend un palier (20) pour supporter le rail de support (19), qui est conçu de telle sorte que le rail de support (19) peut être déplacé verticalement et horizontalement dans la direction longitudinale et perpendiculairement à la direction longitudinale.

11. Dispositif de transmission selon l'une des revendications 8 à 10, dans lequel le dispositif de préhension est une fourche de préhension (14), et le dispositif de transmission comprend une deuxième fourche de préhension (15) ayant au moins trois pointes de préhension (16, 17, 24) par lesquelles peuvent être saisies les pointes de préhension (15 à 17) de la première fourche de préhension (14).

12. Dispositif de transmission selon la revendication 11, dans lequel le support (18) comprend un deuxième rail de support (21), la deuxième fourche de préhension (25) étant fixée à l'une extrémité longitudinale de celui-ci, et le support comprenant un palier pour supporter le deuxième rail de support (21), qui est conçu de telle sorte que le deuxième rail de support (21) peut être déplacé verticalement et horizontalement dans la direction longitudinale et perpendiculairement à la direction longitudinale.
